# EUROPEAN PATENT APPLICATION

(11) **EP 2 857 643 A1**
(43) Date of publication of application: **08.04.2015**
(21) Application number: 12877155.7
(22) Date of filing: 24.05.2012
(51) Int. Cl.: F01N 3/08, B01D 53/56, B01D 53/74, B01D 53/94

(54) **EXHAUST EMISSION PURIFICATION DEVICE FOR INTERNAL COMBUSTION ENGINE**

(71) Applicant: Toyota Jidosha Kabushiki Kaisha, Toyota-shi, Aichi 471-8571 (JP)
(72) Inventor: IRISAWA, Yasuyuki, Toyota-shi Aichi 471-8571 (JP); OBUCHI, Tsuyoshi, Toyota-shi Aichi 471-8571 (JP)
(74) Representative: Intès, Didier Gérard André
(86) International application number: PCT/JP2012/063304
(87) International publication number: WO 2013/175604

(57) **Abstract**

The present invention has for its object to provide a technology in which in an exhaust gas purification apparatus for an internal combustion engine which is provided with a catalyst for NH₃ generation, and a catalyst for removing or reducing NOx in an exhaust gas by using NH₃ as a reducing agent, NOx in the exhaust gas can be reduced, even in cases where the NH₃ generation capacity of the catalyst for NH₃ generation has become low. In order to solve this object, the exhaust gas purification apparatus for an internal combustion engine of the invention is provided with a three-way catalyst and a storage reduction catalyst as catalysts for NH₃ generation, wherein when the NH₃ generation capacity of the storage reduction catalyst does not become low, NH₃ is made to be generated in the storage reduction catalyst by adjusting the air fuel ratio of the exhaust gas flowing into the storage reduction catalyst to a first predetermined rich air fuel ratio, whereas when the NH₃ generation capacity of the storage reduction catalyst becomes low, NH₃ is made to be generated in the three-way catalyst by adjusting the air fuel ratio of the exhaust gas flowing into the three-way catalyst to a second rich air fuel ratio which is higher than the rich air fuel ratio and lower than a theoretical air fuel ratio.

## Description

### [TECHNICAL FIELD]

The present invention relates to an exhaust gas purification apparatus for an internal combustion engine, and in particular to an exhaust gas purification apparatus for an internal combustion engine which is operated in a lean state.

### [BACKGROUND ART]

As an exhaust gas purification apparatus for an internal combustion engine which is operated in a lean burn state, there has been known one in which a first catalyst composed of an occlusion or storage reduction catalyst or a three-way catalyst and a selective catalytic reduction catalyst are arranged in an exhaust passage. In such an exhaust gas purification apparatus, there has been proposed a technology in which ammonia (NH₃) generated in the storage reduction catalyst is supplied to the selective catalytic reduction catalyst (for example, refer to the first patent literature).

In a second patent literature, as an exhaust gas purification apparatus for an internal combustion engine which is operated in a lean burn state, there is described a construction in which a three-way catalyst, a storage reduction catalyst, and an NH₃ adsorption denitrification catalyst are arranged in an exhaust passage of the internal combustion engine. In the second patent literature, there is further described a technology in which NOx released or desorbed from the storage reduction catalyst is reduced by supplying NH₃ generated in the three-way catalyst to the storage reduction catalyst. In the second patent literature, there is also described a technology in which NH₃ and NOx having passed through the storage reduction catalyst are caused to react with each other in the NH₃ adsorption denitrification catalyst.

In a third patent literature, as an exhaust gas purification apparatus for an internal combustion engine which is operated in a lean-burn state, there is described a construction which is provided with a first exhaust passage connected to a part of cylinder groups, a second exhaust passage connected to the remaining part of the cylinder groups, a common exhaust passage in which the first exhaust passage and the second exhaust passage merge with each other, a three-way catalyst arranged in the first exhaust passage, a storage reduction catalyst arranged in the second exhaust passage, and a denitrification catalyst arranged in the common exhaust passage. In the third patent literature, there is also described a technology in which NH₃ generated in the three-way catalyst and NOx released or desorbed from the storage reduction catalyst are caused to react with each other in the denitrification catalyst.

In a fourth patent literature, as an exhaust gas purification apparatus for an internal combustion engine which is operated in a lean burn state, there is described a construction in which a three-way catalyst, an NH₃ injection valve and a selective catalytic reduction catalyst are arranged in an exhaust passage of the internal combustion engine. In the fourth patent literature, there is also described a technology in which when NH₃ is not generated in the three-way catalyst, NH₃ is caused to be injected from the NH₃ injection valve into the exhaust passage.

### [PRIOR ART REFERENCES]

### [PATENT LITERATURES]

[First Patent Literature] Japanese patent laid-open publication No. 2008-286102
[Second Patent Literature] Japanese patent No. 3456408
[Third Patent Literature] Japanese patent laid-open publication No. H10-002213
[Fourth Patent Literature] Japanese patent laid-open publication No. 2011-163193

### [SUMMARY OF THE INVENTION]

### [PROBLEMS TO BE SOLVED BY THE INVENTION]

However, in the above-mentioned first through fourth patent literatures, no reference is made to the case where the NH₃ generation capacity of a catalyst for NH₃ generation has become low. For that reason, in cases where the NH₃ generation capacity of the catalyst for NH₃ generation has become low, NOx in the exhaust gas can not be reduced to a sufficient extent, thus giving rise to a possibility that an increase in exhaust emissions may be caused.

The present invention has been made in view of the above-mentioned actual circumstances, and the object of the present invention is to provide a technology in which in an exhaust gas purification apparatus for an internal combustion engine which is provided with a catalyst for NH₃ generation and a catalyst for removing or reducing NOx in an exhaust gas by using NH₃ as a reducing agent, NOx in the exhaust gas can be reduced, even in cases where the NH₃ generation capacity of the catalyst for NH₃ generation has become low.

### [MEANS FOR SOLVING THE PROBLEMS]

In order to solve the above-mentioned problems, the present invention resides in an exhaust gas purification apparatus for an internal combustion engine which is provided with a storage reduction catalyst for NH₃ generation, and a selective catalytic reduction catalyst arranged in an exhaust passage at the downstream side of said storage reduction catalyst, wherein a three-way catalyst is arranged in the exhaust passage at the upstream side of the storage reduction catalyst, and when the NH₃ generation capacity of the storage reduction catalyst is high, NH₃ is caused to be generated by the storage reduction catalyst, whereas when the NH₃ generation capacity of the storage reduction catalyst is low, NH₃ is caused to be generated by the three-way catalyst.

Specifically, an exhaust gas purification apparatus for an internal combustion engine according to the present invention is provided with:
a storage reduction catalyst that is arranged in an exhaust passage of the internal combustion engine adapted to be operated in a lean burn state, and serves to reduce nitrogen oxides to ammonia when an air fuel ratio of an exhaust gas flowing thereinto is a first rich air fuel ratio which is lower than a theoretical air fuel ratio;
a selective catalytic reduction catalyst that is arranged in the exhaust passage at a location downstream of said storage reduction catalyst, and serves to reduce nitrogen oxides in the exhaust gas by using ammonia as a reducing agent;
a three-way catalyst that is arranged in the exhaust passage at a location upstream of said storage reduction catalyst; and
a control unit that controls the air fuel ratio of the exhaust gas flowing into said three-way catalyst to a second rich air fuel ratio which is higher than said first rich air fuel ratio and lower than the theoretical air fuel ratio, when the ammonia generation capacity of said storage reduction catalyst has become low.

The storage reduction catalyst adsorbs or stores the nitrogen oxides (NOx) contained in the exhaust gas, when the air fuel ratio of the exhaust gas flowing thereinto is a lean air fuel ratio higher than the theoretical air fuel ratio. In addition, the storage reduction catalyst releases the NOx adsorbed or stored therein when the air fuel ratio of the inflowing exhaust gas is a rich air fuel ratio lower than the theoretical air fuel ratio, and at the same time, causes the NOx thus released and reducing components (e.g., hydrocarbon (HC), carbon monoxide (CO), etc.) contained in the exhaust gas to react with each other. At that time, when the air fuel ratio of the exhaust gas is the first rich air fuel ratio (e.g., about 12.5) sufficiently lower than the theoretical air fuel ratio, the amount of NOx to be converted into ammonia (NH₃) becomes large.

The NH₃ generated in the storage reduction catalyst flows into the selective catalytic reduction catalyst together with the exhaust gas, and is adsorbed by the selective catalytic reduction catalyst. When the exhaust gas containing NOx flows into the selective catalytic reduction catalyst, the NH₃ adsorbed to the selective catalytic reduction catalyst acts as a reducing agent for the NOx.

The amount of the NH₃ to be generated at the time when the storage reduction catalyst is exposed to the exhaust gas of the first rich air fuel ratio is in a correlation with the amount of the NOx adsorbed or stored to the storage reduction catalyst. That is, the NH₃ generation capacity of the storage reduction catalyst is in a correlation with the NOx storage capacity of the storage reduction catalyst. Accordingly, as the NOx storage capacity of the storage reduction catalyst becomes lower or decreases, the amount of the NH₃ able to be generated in the storage reduction catalyst decreases.

On the other hand, the exhaust gas purification apparatus for an internal combustion engine of the present invention is configured such that in cases where the NH₃ generation capacity of the storage reduction catalyst has become low (in other words, in cases where the NOx storage capacity has become low), NH₃ is generated in the three-way catalyst. Specifically, the control unit of the present invention controls the air fuel ratio of the exhaust gas flowing into said three-way catalyst to the second rich air fuel ratio (e.g., about 14.0) which is higher than said first rich air fuel ratio and lower than the theoretical air fuel ratio, in cases where the NH₃ generation capacity of the storage reduction catalyst has become low. When the air fuel ratio of the exhaust gas flowing into the three-way catalyst becomes said second rich air fuel ratio, NOx in the exhaust gas reacts with HC or CO thereby to generate NH₃.

Here, note that even in cases where the NH₃ generation capacity of the storage reduction catalyst decreases or becomes lower, when the air fuel ratio of the exhaust gas is adjusted to the second rich air fuel ratio, not a small amount of NH₃ is generated in the storage reduction catalyst, too. Accordingly, the NH₃ generated in the three-way catalyst and the NH₃ generated in the storage reduction catalyst are supplied to the selective catalytic reduction catalyst. In other words, an amount of decrease in the NH₃ generation capacity of the storage reduction catalyst will be compensated for by the NH₃ generation capacity of the three-way catalyst. As a result, even in cases where the NH₃ generation capacity of the storage reduction catalyst has decreased or become low, a decrease in the rate of NOx reduction in the selective catalytic reduction catalyst can be suppressed.

In addition, the larger the amount of NOx in the exhaust gas, the more the amount of the NH₃ generated in the three-way catalyst increases. Accordingly, when the NH₃ generation capacity of the storage reduction catalyst decreases or becomes lower, the amount of NH₃ generated in the three-way catalyst may be increased by increasing the amount of NOx in the exhaust gas. In cases where the air fuel ratio of a mixture to be combusted or burned in a cylinder of the internal combustion engine is higher than the theoretical air fuel ratio, the amount of NOx in the exhaust gas tends to increase.

Accordingly, in cases where the NH₃ generation capacity of the storage reduction catalyst has decreased or become low, the control unit of the present invention may control the amount of fuel injection so as to make the air fuel ratio of the mixture higher than the theoretical air fuel ratio, and at the same time, may add unburnt fuel into the exhaust gas so as to adjust the air fuel ratio of the exhaust gas to said second rich air fuel ratio. Here, note that as a method of adding unburnt fuel into the exhaust gas, there can be used a method of injecting fuel into the cylinder in expansion stroke or exhaust stroke, or a method of injecting fuel into the exhaust passage at a location upstream of the three-way catalyst.

When the amount of NH₃ generated in the three-way catalyst is increased by such a method, even in cases where the NH₃ generation capacity of the storage reduction catalyst has decreased to a large extent, it is possible to suppress the decrease in the rate of NOx reduction in the selective catalytic reduction catalyst.

Here, note that in the internal combustion engine in which a lean burn operation is carried out, the storage reduction catalyst tends to be overused or overworked more than the three-way catalyst. In addition, the storage reduction catalyst also adsorbs or stores sulfur components (SOx) in the exhaust gas (sulfur poisoning), similar to NOx. The larger the amount of the SOx adsorbed or stored in the storage reduction catalyst, the lower the NOx storage capacity of the storage reduction catalyst becomes. Moreover, the storage reduction catalyst is exposed under high temperature at the time when a treatment for eliminating sulfur poisoning (sulfur poisoning recovery treatment) is carried out, so there is a tendency that the storage reduction catalyst is thermally deteriorated easily, as compared with the three-way catalyst. Accordingly, the storage reduction catalyst is easy to be deteriorated or reduced in performance, as compared with the three-way catalyst. In other words, the three-way catalyst is hard to be deteriorated or reduced in performance, as compared with the storage reduction catalyst.

Accordingly, in cases where the storage reduction catalyst is used as a catalyst for generation of NH₃, when the three-way catalyst is used as an auxiliary catalyst for generation of NH₃, the NH₃ generation capacity in the entire exhaust gas purification apparatus as a whole can be kept high over a long period of time. In addition, in cases where the storage reduction catalyst and the three-way catalyst are used as catalysts for generation of NH₃, the NH₃ generation capacity can also be enhanced in a wide engine operating region, in comparison with the case where only the storage reduction catalyst is used as a catalyst for generation of NH₃.

Here, as a case where the NH₃ generation capacity of the storage reduction catalyst decreases or becomes lower, there can be considered a case where the storage reduction catalyst has been subjected to sulfur poisoning, or a case where the storage reduction catalyst has been subjected to thermal deterioration, or a case where the temperature of the storage reduction catalyst is low, etc.

In the case where the storage reduction catalyst has been subjected to sulfur poisoning, the amount of the NOx able to be occluded or stored by the storage reduction catalyst becomes smaller, in comparison with the case where not subjected to sulfur poisoning. That is, in the case where the storage reduction catalyst has been subjected to sulfur poisoning, the NOx storage capacity of the storage reduction catalyst becomes lower, in comparison with the case where not subjected to sulfur poisoning. As a result, the amount of the NOx flowing out from the storage reduction catalyst, at the time when the air fuel ratio of the mixture to be combusted or burned in the cylinder of the internal combustion engine is a lean air fuel ratio (i.e., when the air fuel ratio of the exhaust gas flowing into the storage reduction catalyst is a lean air fuel ratio), becomes larger in the case where the storage reduction catalyst has been subjected to sulfur poisoning, as compared with the case where not subjected to sulfur poisoning.

In the case where the storage reduction catalyst has been subjected to thermal deterioration, the NOx storage capacity of the storage reduction catalyst becomes lower, in comparison with the case where not subjected to thermal deterioration. As a result, the amount of the NOx flowing out from the storage reduction catalyst, at the time when the air fuel ratio of the mixture to be combusted or burned in the cylinder of the internal combustion engine is a lean air fuel ratio (i.e., when the air fuel ratio of the exhaust gas flowing into the storage reduction catalyst is a lean air fuel ratio), becomes larger in the case where the storage reduction catalyst has been subjected to thermal deterioration, as compared with the case where not subjected to thermal deterioration.

Accordingly, the exhaust gas purification apparatus for an internal combustion engine of the present invention may make a determination that the NH₃ generation capacity of the storage reduction catalyst becomes low, on condition that the amount of the NOx discharged from the storage reduction catalyst at the time when the air fuel ratio of the exhaust gas flowing into the storage reduction catalyst is a lean air fuel ratio higher than the theoretical air fuel ratio exceeds an upper limit value thereof. The "upper limit value" referred to herein corresponds to a maximum value of an amount of NOx which can flow out from the storage reduction catalyst, at the when the internal combustion engine is operated in a lean burn condition and when the NH₃ generation capacity of the storage reduction catalyst does not become low.

Specifically, the exhaust gas purification apparatus for an internal combustion engine of the present invention may be further provided with an NOx sensor that is arranged in the exhaust passage at a location downstream of the storage reduction catalyst and upstream of the selective catalytic reduction catalyst, for detecting the amount of the NOx contained in the exhaust gas. In that case, the control unit may make a determination that the NH₃ generation capacity of the storage reduction catalyst becomes low, on condition that the amount of NOx detected by the NOx sensor at the time that the air fuel ratio of the exhaust gas flowing into the storage reduction catalyst is a lean air fuel ratio higher than the theoretical air fuel ratio exceeds an upper limit value thereof.

In addition, in cases where the internal combustion engine is cold started, etc., it is more difficult to cause a temperature rise of the storage reduction catalyst than a temperature rise of the three-way catalyst. That is, there is a high possibility that the time when the storage reduction catalyst is activated is later than the time when the three-way catalyst is activated. Before the activation of the storage reduction catalyst, the amount of the NOx to be adsorbed or stored in the storage reduction catalyst becomes smaller, and at the same time, the amount of the NH₃ to be generated in the storage reduction catalyst also becomes smaller, than after the activation of the storage reduction catalyst. As a result, the amount of the NOx flowing out from the storage reduction catalyst, at the time when the air fuel ratio of the mixture to be combusted or burned in the cylinder of the internal combustion engine is a lean air fuel ratio (i.e., when the air fuel ratio of the exhaust gas flowing into the storage reduction catalyst is a lean air fuel ratio), becomes larger before the activation of the storage reduction catalyst, as compared with after that.

Accordingly, the exhaust gas purification apparatus for an internal combustion engine of the present invention may make a determination that the NH₃ generation capacity of the storage reduction catalyst becomes low, on condition that the amount of the NOx discharged from the storage reduction catalyst at the time when the air fuel ratio of the exhaust gas flowing into the storage reduction catalyst is a lean air fuel ratio and when the temperature of the storage reduction catalyst is lower than a predetermined temperature exceeds an upper limit value thereof.

Specifically, the exhaust gas purification apparatus for an internal combustion engine of the present invention may be further provided with: an NOx sensor that is arranged in the exhaust passage at a location downstream of the storage reduction catalyst and upstream of the selective catalytic reduction catalyst, for detecting the amount of the NOx contained in the exhaust gas; and a temperature sensor that detects the temperature of the storage reduction catalyst. In that case, the control unit may make a determination that the NH₃ generation capacity of the storage reduction catalyst becomes low, on condition that the amount of NOx detected by the NOx sensor at the time when the air fuel ratio of the exhaust gas flowing into the storage reduction catalyst is a lean air fuel ratio and when the temperature detected by the temperature sensor is equal to or lower than the predetermined temperature exceeds an upper limit value thereof.

Here, note that the "predetermined temperature" referred to herein is, for example, the lowest temperature at which the NOx storage capacity or the NH₃ generation capacity of the storage reduction catalyst is activated, or a temperature which is obtained by subtracting a margin from the lowest temperature.

When a decrease in the NH₃ generation capacity of the storage reduction catalyst is determined by means of the various kinds of methods as referred to above, it becomes possible to generate NH₃ by making use of the three-way catalyst, in cases where the storage reduction catalyst is subjected to sulfur poisoning, or in cases where the storage reduction catalyst is subjected to thermal deterioration, or in cases where the temperature of the storage reduction catalyst is low. As a result, even in cases where the NH₃ generation capacity of the storage reduction catalyst is low, a decrease in the amount of the NH₃ to be supplied to the selective catalytic reduction catalyst can be suppressed. Accordingly, it is possible to suppress a decrease in the rate of NOx reduction of the selective catalytic reduction catalyst (i.e., the ratio of the amount of the NOx reduced in the selective catalytic reduction catalyst with respect to the amount of the NOx flowing into the selective catalytic reduction catalyst).

### [EFFECT OF THE INVENTION]

According to the present invention, in an exhaust gas purification apparatus for an internal combustion engine which is provided with a catalyst for NH₃ generation, and a catalyst for removing NOx in an exhaust gas by using NH₃ as a reducing agent, NOx in the exhaust gas can be reduced, even in cases where the NH₃ generation capacity of the catalyst for NH₃ generation has become low.

### [BRIEF DESCRIPTION OF THE DRAWINGS]

[Fig. 1] is a view showing the schematic construction of an exhaust system of an internal combustion engine to which the present invention is applied.
[Fig. 2] is a view showing the relation between an air fuel ratio of exhaust gas flowing into a storage reduction catalyst and an amount of NH₃ to be generated per unit time.
[Fig. 3] is a view showing the relation between an air fuel ratio of exhaust gas flowing into a three-way catalyst and an amount of NH₃ to be generated per unit time.
[Fig. 4] is a flow chart showing a processing routine which is executed by an ECU at the time when reducing agent supply processing is carried out in a first embodiment of the present invention.
[Fig. 5] is a flow chart showing a processing routine which is executed by an ECU at the time when reducing agent supply processing is carried out in a second embodiment of the present invention.

### [MODES FOR CARRYING OUT THE INVENTION]

Hereinafter, specific embodiments of the present invention will be described based on the attached drawings. However, the dimensions, materials, shapes, relative arrangements and so on of component parts described in the embodiments are not intended to limit the technical scope of the present invention to these alone in particular as long as there are no specific statements.

### < First Embodiment >

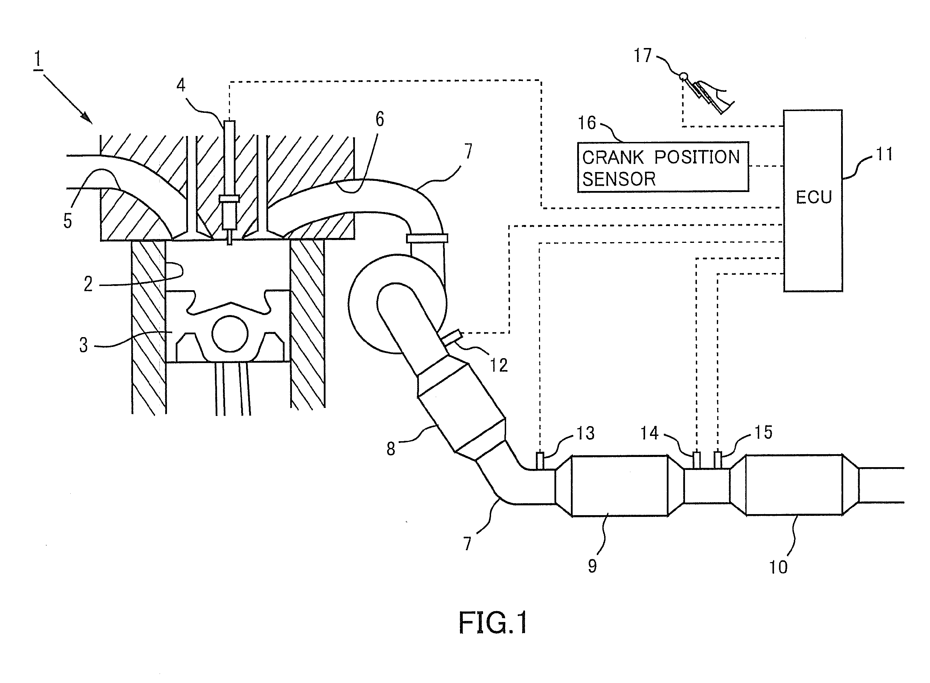

First, reference will be made to a first embodiment of the present invention based on Figs. 1 through 4. Fig. 1 is a view showing the schematic construction of an exhaust system of an internal combustion engine to which the present invention is applied. An internal combustion engine 1 shown in Fig. 1 is an internal combustion engine of compression ignition type (diesel engine), but may be an internal combustion engine of spark ignition type (gasoline engine) which is operated in a lean burn condition.

The internal combustion engine 1 has a cylinder 2 of a columnar shape. A piston 3 is received inside the cylinder 2 for sliding movement relative thereto. The internal combustion engine 1 is provided with a fuel injection valve 4 for injecting fuel into the cylinder. The internal combustion engine 1 is provided with an intake port 5 for introducing air into the cylinder 2.

The air introduced into the cylinder 2 from the intake port 5 and the fuel injected from the fuel injection valve 4 are ignited to burn or combust, when compressed by the piston 3 in a compression stroke. The piston 3 is pushed from a top dead center side toward a bottom dead center side in response to the heat energy (combustion pressure) generated when the air and fuel are combusted. The kinetic energy of the piston 3 at that time is transmitted to an engine output shaft (crankshaft) through an unillustrated connecting rod.

The internal combustion engine 1 is provided with an exhaust port 6 for discharging burnt gas in the cylinder 2 therefrom. The exhaust port 6 is connected to an exhaust passage 7. A first catalyst casing 8 is arranged in the middle of the exhaust passage 7. The first catalyst casing 8 is a hollow cylindrical body made of metal which receives a catalyst carrier by which a three-way catalyst is supported. The three-way catalyst oxidizes and reduces hydrocarbon (HC), carbon monoxide (CO) and nitrogen oxides (NOx) contained in exhaust gas when the air fuel ratio of the exhaust gas flowing into the first catalyst casing 8 is substantially equal to a theoretical air fuel ratio.

A second catalyst casing 9 is arranged in the exhaust passage 7 at the downstream side of the first catalyst casing 8. The second catalyst casing 9 is a hollow cylindrical body made of metal which receives a catalyst carrier by which a storage reduction catalyst is supported. The storage reduction catalyst adsorbs or stores the nitrogen oxides (NOx) contained in the exhaust gas, when the air fuel ratio of the exhaust gas flowing into the second catalyst casing 9 is a lean air fuel ratio higher than the theoretical air fuel ratio. In addition, the storage reduction catalyst desorbs or releases the nitrogen oxides (NOx) stored in the exhaust gas, when the air fuel ratio of the exhaust gas flowing into the second catalyst casing 9 is lower than the theoretical air fuel ratio, and reduces the NOx thus released to nitrogen (N₂) or ammonia (NH₃) by causing them to react with HC or CO.

A third catalyst casing 10 is arranged in the exhaust passage 7 at the downstream side of the second catalyst casing 9. The third catalyst casing 10 is a hollow cylindrical body made of metal which receives a catalyst carrier by which a selective catalytic reduction catalyst is supported. When the exhaust gas flowing into the third catalyst casing 10 contains NH₃, the selective catalytic reduction catalyst adsorbs or stores the NH₃. In addition, when the exhaust gas containing NOx flows into the third catalyst casing 10, the selective catalytic reduction catalyst reduces the NOx contained in the exhaust gas by using as a reducing agent the NH₃ which has been adsorbed therein.

An ECU 11 is provided in combination with the internal combustion engine 1 as constructed in this manner. The ECU 11 is an electronic control unit which is composed of a CPU, a ROM, a RAM, a backup RAM, and so on. The ECU 11 is electrically connected to a variety of kinds of sensors such as an A/F (air fuel ratio) sensor 12, an O₂ (oxygen) sensor 13, an exhaust gas temperature sensor 14, an NOx sensor 15, a crank position sensor 16, an accelerator position sensor 17, and so on.

The A/F sensor 12 is arranged in the exhaust passage 7 at a location upstream of the first catalyst casing 8, and outputs an electric signal correlated with an air fuel ratio of the exhaust gas flowing through the exhaust passage 7. The oxygen sensor 13 is arranged in the exhaust passage 7 at a location downstream of the first catalyst casing 8 and upstream of the second catalyst casing 9, and outputs an electric signal correlated with a concentration (or an amount) of oxygen (O₂) contained in the exhaust gas flowing through the exhaust passage 7. The exhaust gas temperature sensor 14 is arranged in the exhaust passage 7 at a location downstream of the second catalyst casing 9 and upstream of the third catalyst casing 10, and outputs an electric signal correlated with a temperature of the exhaust gas flowing through the exhaust passage 7. The NOx sensor 15 is arranged in the exhaust passage 7 at a location downstream of the second catalyst casing 9 and upstream of the third catalyst casing 10, and outputs an electric signal correlated with a concentration (or an amount) of NOx contained in the exhaust gas flowing through the exhaust passage 7. The crank position sensor 16 outputs an electric signal correlated with a rotational position of the crankshaft of the internal combustion engine 1. The accelerator position sensor 17 outputs an electric signal correlated with an amount of operation of an accelerator pedal (i.e., a degree of accelerator opening).

In addition, the ECU 11 is electrically connected to a variety of kinds of equipment such as the fuel injection valve 4, etc., and controls the variety of kinds of equipment based on the output signals of the above-mentioned variety of kinds of sensors. For example, the ECU 11 carries out reducing agent supply processing for supplying NH₃ to the selective catalytic reduction catalyst in the third catalyst casing 10, in addition to known controls such as fuel injection control for controlling the amount of fuel injection and the fuel injection timing of the fuel injection valve 4, rich spike control to decrease the air fuel ratio of the exhaust gas in a periodic manner so as to cause the NOx stored in the storage reduction catalyst in the second catalyst casing 9 to be released and reduced, poisoning recovery control to make the interior of the second catalyst casing 9 to be a high temperature and rich atmosphere so as to cause the SOx stored in the storage reduction catalyst in the second catalyst casing 9 to be released and reduced, and so on. In the following, a method of carrying out the reducing agent supply processing in this embodiment will be described.

The ECU 11 causes NH₃ to be generated in the storage reduction catalyst, at the time when the amount of adsorption of NH₃ (hereinafter, referred to as the amount of NH₃ adsorption) in the selective catalytic reduction catalyst becomes equal to or less than a predetermined amount. Here, note that the amount of NH₃ adsorption in the selective catalytic reduction catalyst can be obtained by integrating an amount of the NH₃ consumed by the reduction of NOx in the selective catalytic reduction catalyst after causing a fixed amount of NH₃ to be adsorbed to the selective catalytic reduction catalyst, and subtracting an integrated value of the amount of consumed NH₃ from the fixed amount of NH₃.

The amount of the NH₃ consumed by the reduction of NOx in the selective catalytic reduction catalyst is correlated with the amount of the NOx having flowed into the selective catalytic reduction catalyst. The amount of the NOx having flowed into the selective catalytic reduction catalyst can be calculated by using, as parameters, the amount of the NOx discharged from the internal combustion engine 1, the amount of the NOx reduced by the three-way catalyst in the first catalyst casing 8, the amount of the NOx stored or reduced by the storage reduction catalyst in the second catalyst casing 9. The amount of the NOx discharged from the internal combustion engine 1 can be calculated by using as parameters the amount of intake air, the amount of fuel injection, the number of engine revolutions per unit time, and so on. The amount of the NOx reduced by the three-way catalyst in the first catalyst casing 8 can be calculated by using as parameters the air fuel ratio of the exhaust gas, the temperature of the three-way catalyst (ambient temperature in the first catalyst casing 8), and so on. The amount of the NOx stored or reduced by the storage reduction catalyst in the second catalyst casing 9 can be calculated by using as parameters the air fuel ratio of the exhaust gas, the temperature of the storage reduction catalyst (ambient temperature in the second catalyst casing 9), and so on.

When the amount of NH₃ adsorption calculated by the above-mentioned methods is equal to or smaller than the predetermined amount, the ECU 11 decreases the air fuel ratio of the exhaust gas flowing into the second catalyst casing 9 to a rich air fuel ratio (target rich air fuel ratio) lower than the theoretical air fuel ratio. Specifically, after the injection of fuel to be combusted or burned in the cylinder 2 (i.e., fuel which contributes to the output power of the internal combustion engine 1), the ECU 11 decreases the air fuel ratio of the exhaust gas by causing fuel, which will not be combusted or burned in the cylinder 2, to be injected from the fuel injection valve 4 (e.g., post injection in expansion stroke, or after injection in exhaust stroke). At that time, the ECU 11 should only calculate an amount of post injection or an amount of after injection, by using as parameters the amount of fuel to be combusted or burned in the cylinder 2, the amount of intake air in the internal combustion engine 1, and a target rich air fuel ratio.

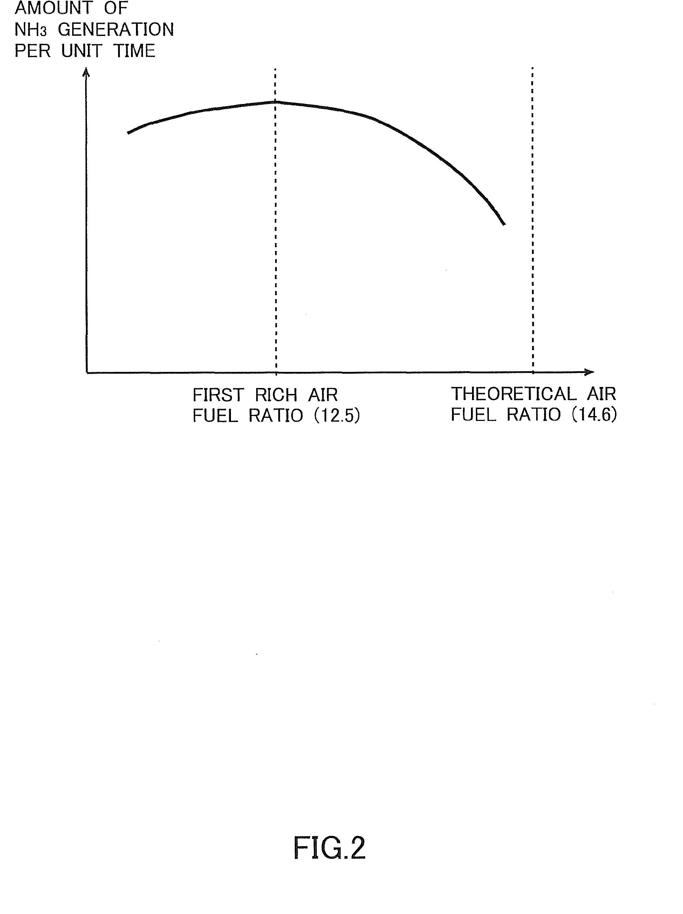

When the exhaust gas of a rich air fuel ratio flows into the the second catalyst casing 9, the NOx stored in the storage reduction catalyst is released. The NOx released from the storage reduction catalyst reacts with HC or CO in the exhaust gas, thereby generating N₂ or NH₃. Here, note that the amount of the NH₃ to be generated in the storage reduction catalyst per unit time becomes the largest at the time when the air fuel ratio of the exhaust gas flowing into the second catalyst casing 9 becomes about 12.5 (a first rich air fuel ratio), as shown in Fig. 2. Accordingly, the ECU 11 should only control the amount of post injection or the amount of after injection by setting the above-mentioned first rich air fuel ratio as a target rich air fuel ratio.

However, in the internal combustion engine 1 in which a lean burn operation is carried out, the storage reduction catalyst tends to be overused or overworked more than the three-way catalyst. For that reason, it can be said that the storage reduction catalyst deteriorates more easily than the three-way catalyst. For example, when the above-mentioned poisoning recovery control is carried out in a repeated manner, the storage reduction catalyst may be subjected to thermal deterioration. In the case where the storage reduction catalyst has been subjected to thermal deterioration, the NOx storage capacity of the storage reduction catalyst decreases or becomes lower, in comparison with the case where not subjected to thermal deterioration. As the NOx storage capacity of the storage reduction catalyst decreases, the NH₃ generation capacity of the storage reduction catalyst also decreases.

In addition, the NOx storage capacity of the storage reduction catalyst decreases or becomes lower, in cases where the storage reduction catalyst has been subjected to sulfur poisoning, too. For that reason, in the case where the storage reduction catalyst has been subjected to sulfur poisoning, the NH₃ generation capacity of the storage reduction catalyst becomes lower, in comparison with the case where not subjected to sulfur poisoning.

Accordingly, in cases where the storage reduction catalyst has been subjected to thermal deterioration or sulfur poisoning, a desired amount of NH₃ may not be able to be supplied to the selective catalytic reduction catalyst, even if the air fuel ratio of the exhaust gas flowing into the second catalyst casing 9 is controlled to be the first rich air fuel ratio. In cases where the amount of NH₃ supplied to the selective catalytic reduction catalyst has decreased, the rate of NOx reduction in the selective catalytic reduction catalyst becomes low, so that the amount of the NOx discharged into the atmosphere may become large.

On the other hand, there can be considered a method of increasing the frequency of carrying out the reducing agent supply processing, but this may cause an increase in the amount of fuel consumption. In addition, there can also be considered a method of decreasing the amount of NOx discharged from the internal combustion engine 1 by decreasing the air fuel ratio of the mixture to be combusted or burned in the cylinder 2 of the internal combustion engine 1, but in this case, too, an increase in the amount of fuel consumption can not be avoided.

Accordingly, in the reducing agent supply processing in this embodiment, the ECU 11 controls such that in cases where the storage reduction catalyst has been subjected to thermal deterioration or sulfur poisoning, NH₃ is generated in the three-way catalyst of the first catalyst casing 8. Specifically, the ECU 11 controls the amount of post injection or the amount of after injection so that the air fuel ratio of the exhaust gas is made to be a second rich air fuel ratio which is higher than the first rich air fuel ratio and lower than the theoretical air fuel ratio.

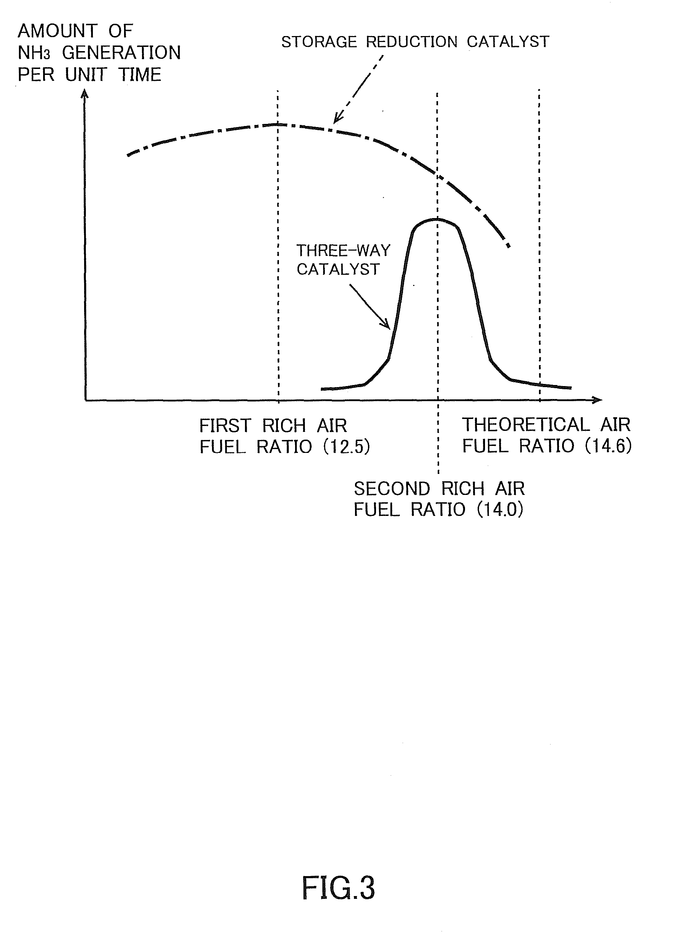

The amount of the NH₃ to be generated in the storage reduction catalyst per unit time becomes the largest at the time when the air fuel ratio of the exhaust gas flowing into the first catalyst casing 8 becomes about 14.0 (the second rich air fuel ratio), as shown in Fig. 3. Accordingly, when the NH₃ generation capacity of the storage reduction catalyst decreases, the ECU 11 should only control the amount of post injection or the amount of after injection so that the air fuel ratio of the exhaust gas becomes equal to the above-mentioned second rich air fuel ratio.

However, the amount of the NH₃ to be generated in the three-way catalyst per unit time (i.e., a solid line in Fig. 3) becomes smaller than the amount of the NH₃ to be generated in the storage reduction catalyst per unit time (i.e., an alternate long and short dash line in Fig. 3). For that reason, it is also considered that in cases where the air fuel ratio of the exhaust gas is controlled to be the above-mentioned second rich air fuel ratio, the amount of NH₃ supplied to the selective catalytic reduction catalyst does not reach the desired amount.

As long as the NOx storage capacity of the storage reduction catalyst is not lost completely, not a small amount of NH₃ is generated in the storage reduction catalyst, when the air fuel ratio of the exhaust gas becomes the above-mentioned second rich air fuel ratio. For example, even at the time when the air fuel ratio of the exhaust gas is equal to the second rich air fuel ratio, the storage reduction catalyst can generate NH₃, as shown at an alternate long and short dash line in Fig. 3.

Accordingly, in cases where the NH₃ generation capacity of the storage reduction catalyst has become low, when the air fuel ratio of the exhaust gas is made equal to the second rich air fuel ratio, the NH₃ generated in the three-way catalyst and the NH₃ generated in the storage reduction catalyst will be supplied to the selective catalytic reduction catalyst. In other words, in cases where the NH₃ generation capacity of the storage reduction catalyst has become low or has decreased, an amount of such a decrease will be compensated for by the NH₃ generation capacity of the three-way catalyst. As a result, even in cases where the NH₃ generation capacity of the storage reduction catalyst has become low, a desired amount of NH₃ can be supplied to the selective catalytic reduction catalyst.

Moreover, it is more difficult for the NH₃ generation capacity of the three-way catalyst to become low, as compared with the storage reduction catalyst. For that reason, the NH₃ generation capacity of the exhaust gas purification apparatus including the first catalyst casing 8 and the second catalyst casing 9 is maintained to be high over a long period of time. Further, the exhaust gas purification apparatus of this embodiment can also exhibit stable NH₃ generation capacity in a wider operating region, in comparison with the case where only the storage reduction catalyst is used as a catalyst for generation of NH₃.

In cases where the NH₃ generation capacity of the storage reduction catalyst has become low, when the air fuel ratio of the exhaust gas is made equal to the second rich air fuel ratio, it is also possible to generate a desired amount of NH₃, while suppressing an increase in the amount of fuel consumption accompanying the execution of the reducing agent supply processing.

Here, note that in cases where the NH₃ generation capacity of the storage reduction catalyst has become low or has decreased to a remarkable extent, the ECU 11 may carry out the reducing agent supply processing, while controlling the operating state of the internal combustion engine 1, in such a manner that the amount of the NOx flowing into the first catalyst casing 8 becomes large. The amount of the NOx flowing into the first catalyst casing 8 becomes large, when a mixture of a lean air fuel ratio is combusted or burned under a high temperature and high pressure condition. Accordingly, in cases where the NH₃ generation capacity of the storage reduction catalyst has become low to a remarkable extent, the ECU 11 may control the operating state of the internal combustion engine 1 in such a manner that the mixture of a lean air fuel ratio is combusted or burned under a high temperature and high pressure condition.

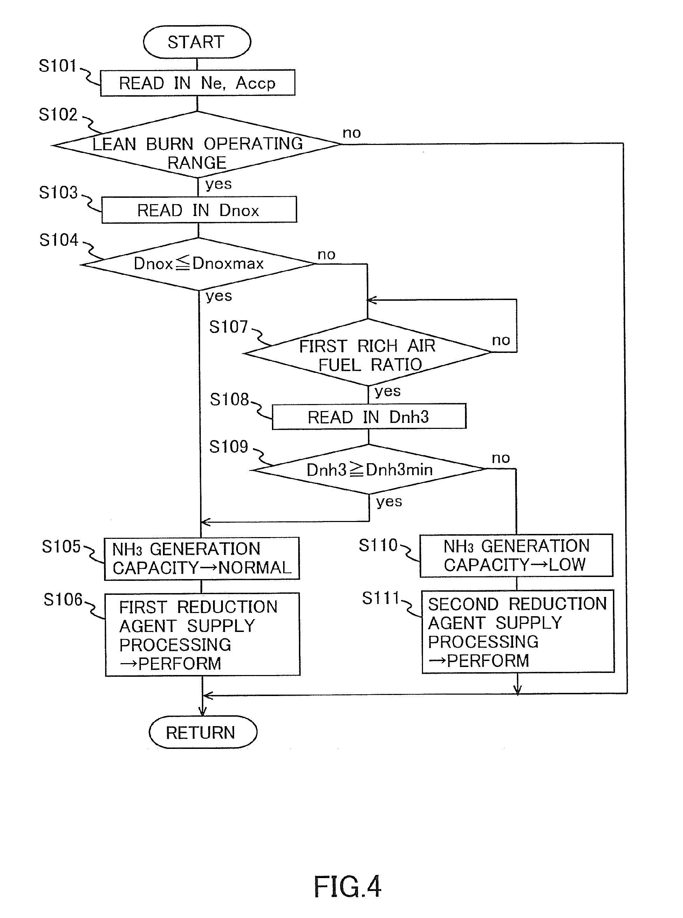

In the following, a specific execution procedure of the reducing agent supply processing in this embodiment will be described in line with Fig. 4. Fig. 4 is a flow chart which shows a processing routine carried out by the ECU 11 at the time the reducing agent supply processing is performed. This processing routine has been stored in the ROM, etc., of the ECU 11 in advance, and is carried out in a periodic manner by means of the ECU 11.

In the processing routine of Fig. 4, first in step S101, the ECU 11 reads in a variety of kinds of data such as the number of engine revolutions per unit time Ne, the output signal (accelerator opening degree) Accp of the accelerator position sensor 17, etc.

In step S102, the ECU 11 determines whether the operating state of the internal combustion engine 1 is in a lean burn operating region, by using, as parameters, the number of engine revolutions per unit time Ne and the accelerator opening degree Accp, which have been read in the above-mentioned step S101. In cases where a negative determination is made in step S102 (e.g., in cases where the internal combustion engine 1 is operated at a rich air fuel ratio, such as in cases where the internal combustion engine 1 is in a high load operating state), the ECU 11 once ends the execution of this routine. On the other hand, in cases where an affirmative determination is made in step S102, the routine of the ECU 11 goes to step S103.

In step S103, the ECU 11 reads in the output signal (the amount of NOx discharged from the second catalyst casing 9) Dnox of the NOx sensor 15. Subsequently, the routine of the ECU 11 goes to the processing of step S104, where it is determined whether the value of the output signal Dnox thus read in the above-mentioned step S103 is equal to or less than an upper limit value Dnoxmax.

The "upper limit value Dnoxmax" referred to herein corresponds to a maximum value of the amount of NOx which can be discharged from the second catalyst casing 9, at the time when the internal combustion engine 1 is operated in a lean burn condition and when the NOx storage capacity of the storage reduction catalyst does not become low. Such an upper limit value Dnoxmax may be a fixed value which has been obtained in advance by adaptation processing making use of experiments, etc. In addition, the amount of the NOx discharged from the second catalyst casing 9 can be changed according to the temperature of the storage reduction catalyst or the flow rate of the exhaust gas. For that reason, the above-mentioned upper limit value Dnoxmax may be a variable value which is changed with the temperature of the storage reduction catalyst or the flow rate of the exhaust gas used as a parameter. At that time, as the temperature of the storage reduction catalyst, there can be used the output signal of the exhaust gas temperature sensor 14 which is arranged at the downstream side of the second catalyst casing 9. Also, as the flow rate of the exhaust gas, there can be used an amount of intake air in the internal combustion engine 1 (e.g., an output signal of an air flow meter which is arranged in an intake passage).

In cases where an affirmative determination is made in the above-mentioned step S104 (Dnox < Dnoxmax), it is assumed that the NOx storage capacity of the storage reduction catalyst is within a normal range. That is, in cases where an affirmative determination is made in the above-mentioned step S104, it is assumed that the NH₃ generation capacity of the storage reduction catalyst is within a normal range. Accordingly, the routine of the ECU 11 goes to the processing of step S105, where a determination is made that the NH₃ generation capacity of the storage reduction catalyst is normal.

In cases where the determination is made in the above-mentioned step S105 that the NH₃ generation capacity of the storage reduction catalyst is normal, the routine of the ECU 11 goes to the processing of step S106, where reducing agent supply processing using the storage reduction catalyst as a catalyst for generation of NH₃ (first reducing agent supply processing) is carried out. Specifically, when the amount of NH₃ adsorption of the selective catalytic reduction catalyst becomes equal to or less than a predetermined amount, the ECU 11 controls the amount of post injection or the amount of after injection of the fuel injection valve 4 in such a manner that the air fuel ratio of the exhaust gas discharged from the internal combustion engine 1 becomes equal to the above-mentioned first rich air fuel ratio. In that case, the NOx stored or adsorbed in the storage reduction catalyst and the NOx in the exhaust gas are converted into NH₃. As a result, a desired amount of NH₃ will be generated in the storage reduction catalyst.

In cases where a negative determination is made in the above-mentioned step S104 (Dnox > Dnoxmax), it is assumed that the NOx storage capacity of the storage reduction catalyst is out of the normal range. In that case, the ECU 11 may make a determination that the NH₃ generation capacity of the storage reduction catalyst becomes low. However, even in cases where the NOx storage capacity of the storage reduction catalyst becomes low, the NH₃ generation capacity of the storage reduction catalyst may also be within the normal range. Accordingly, in cases where a negative determination is made in the above-mentioned step S104, the ECU 11 determines in steps S107 through S109 whether the NH₃ generation capacity of the storage reduction catalyst is normal.

First, in step S107, the ECU 11 determines whether the air fuel ratio of the exhaust gas flowing into the second catalyst casing 9 is equal to the first rich air fuel ratio. For example, on condition that the value of the output signal of the A/F sensor 12 during the execution of the first reducing agent supply processing or at the end of the execution of the first reducing agent supply processing is equal to the first rich air fuel ratio, the ECU 11 makes a determination that the air fuel ratio of the exhaust gas flowing into the second catalyst casing 9 is equal to the first rich air fuel ratio. In cases where a negative determination is made in step S107, the ECU 11 carries out the processing of step S107 in a repeated manner. On the other hand, in cases where an affirmative determination is made in step S107, the routine of the ECU 11 goes to step S108.

In step S108, the ECU 11 reads in the amount of NH₃ Dnh3 discharged from the second catalyst casing 9. At that time, the ECU 11 reads in the output signal of the NOx sensor 15 as the amount of NH₃ Dnh3 discharged from the second catalyst casing 9. Here, the NOx sensor 15 also reacts with NH₃, in addition to the NOx in the exhaust gas. In addition, when the air fuel ratio of the exhaust gas is the first rich air fuel ratio, the NOx in the exhaust gas is reduced and cleaned (removed) in the three-way catalyst or the storage reduction catalyst. Accordingly, it can be considered that the output signal of the NOx sensor 15 when the air fuel ratio of the exhaust gas is equal to the first rich air fuel ratio is correlated with the amount of the NH₃ contained in the exhaust gas.

In step S109, the ECU 11 determines whether the amount of NH₃ Dnh3 read in the above-mentioned step S108 is equal to or larger than a lower limit value Dnh3min. The "lower limit value Dnh3min" referred to herein corresponds to a minimum value of the amount of NH₃ which can be discharged from the second catalyst casing 9, when the NH₃ generation capacity of the storage reduction catalyst is normal. Such a lower limit value Dnh3min is a value which has been decided in advance by adaptation processing using experiments, etc.

In cases where an affirmative determination is made in the above-mentioned step S109 (Dnh3 ≧ Dnh3min), the routine of the ECU 11 goes to the processing of step S105, where a determination is made that the NH₃ generation capacity of the storage reduction catalyst is normal. On the other hand, in cases where a negative determination is made in the above-mentioned step S109 (Dnh3 < Dnh3min), the routine of the ECU 11 goes to the processing of step S110, where a determination is made that the NH₃ generation capacity of the storage reduction catalyst becomes low.

In cases where the determination is made in the above-mentioned step S110 that the NH₃ generation capacity of the storage reduction catalyst becomes low, the routine of the ECU 11 goes to the processing of step S111, where reducing agent supply processing using the three-way catalyst as a catalyst for generation of NH₃ (second reducing agent supply processing) is carried out. Specifically, when the amount of NH₃ adsorption of the selective catalytic reduction catalyst becomes equal to or less than a predetermined amount, the ECU 11 controls the amount of post injection or the amount of after injection of the fuel injection valve 4 in such a manner that the air fuel ratio of the exhaust gas discharged from the internal combustion engine 1 becomes equal to the above-mentioned second rich air fuel ratio. In that case, the NOx contained in the exhaust gas is converted into NH₃ in the three-way catalyst. Here, note that when the above-mentioned second reducing agent supply processing is carried out, if the NH₃ generation capacity of the storage reduction catalyst is not completely lost, the NOx stored or adsorbed in the storage reduction catalyst and the NOx in the exhaust gas are also converted into NH₃. As a result, the NH₃ generated in the three-way catalyst (as well as the NH₃ generated in the storage reduction catalyst) is supplied to the selective catalytic reduction catalyst. Accordingly, in cases where the NH₃ generation capacity of the storage reduction catalyst has become low or has decreased, an amount of such a decrease can be compensated for by the NH₃ generation capacity of the three-way catalyst.

As described above, a control unit according to the present invention is achieved by means of the ECU 11 carrying out the processing routine of Fig. 4. As a result, when the NH₃ generation capacity of the storage reduction catalyst is high, NH₃ is generated by the storage reduction catalyst, whereas when the NH₃ generation capacity of the storage reduction catalyst is low, NH₃ is generated by the three-way catalyst (and the storage reduction catalyst). Accordingly, the NH₃ generation capacity of the exhaust gas purification apparatus including the three-way catalyst and the storage reduction catalyst is maintained to be high over a long period of time, and at the same time, is also maintained to be high in a wide operating region of the internal combustion engine 1.

Here, note that with respect to the catalyst for generation of NH₃, there is also considered a method in which the three-way catalyst is used in a regular manner, and the storage reduction catalyst is used in an auxiliary manner. However, the amount of NH₃ generated by the three-way catalyst easily becomes smaller than the amount of NH₃ generated by the storage reduction catalyst, and the NH₃ generation capacity of the storage reduction catalyst easily becomes lower than the NH₃ generation capacity of the three-way catalyst. Accordingly, it is preferable that as the catalyst for generation of NH₃, the storage reduction catalyst be used on a regular basis, and the three-way catalyst be used on an auxiliary basis.

### < Second Embodiment >

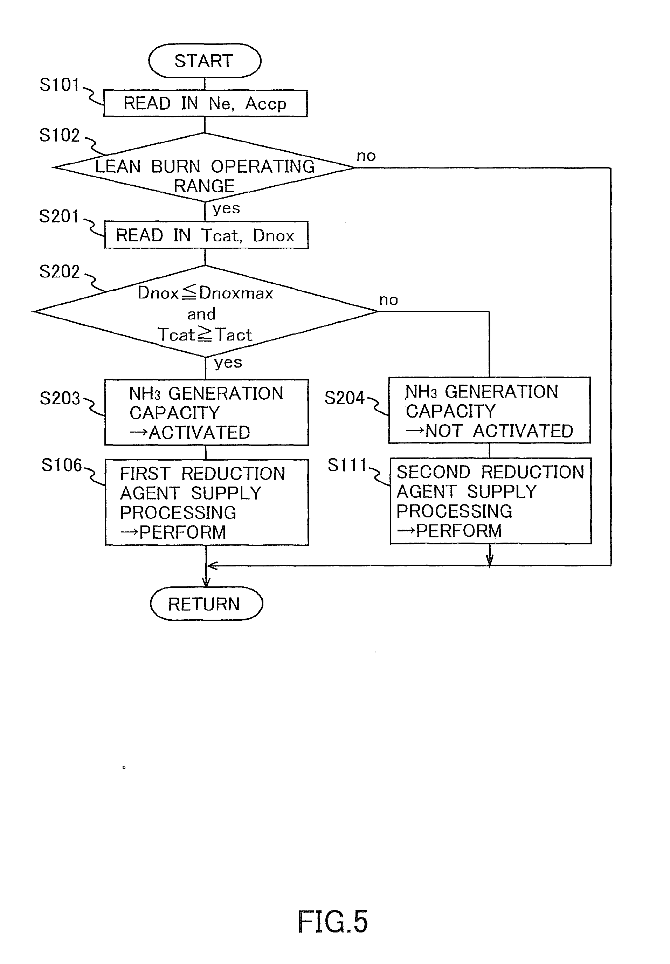

Next, reference will be made to a second embodiment of the present invention based on Fig. 5. Here, a construction different from that of the above-mentioned first embodiment will be described, and an explanation of the same construction will be omitted.

In the above-mentioned first embodiment, there has been described an example in which when the NH₃ generation capacity of the storage reduction catalyst has become low or decreased due to sulfur poisoning or thermal deterioration, the three-way catalyst is made to function as a catalyst for generation of NH₃, but in this second embodiment, reference will be made to an example in which when the NH₃ generation capacity of the storage reduction catalyst has not been activated, the three-way catalyst is made to function as a catalyst for generation of NH₃.

The second catalyst casing 9 is arranged at a location more away from the internal combustion engine 1, with respect to the first catalyst casing 8. For that reason, in cases where the internal combustion engine 1 is cold started, etc., it is easy for the time when the NH₃ generation capacity of the storage reduction catalyst is activated to become later than the time when the NH₃ generation capacity of the three-way catalyst is activated.

Accordingly, the ECU 11 controls the amount of post injection or the amount of after injection so that, when the NH₃ generation capacity of the storage reduction catalyst has not been activated, the air fuel ratio of the exhaust gas flowing into the first catalyst casing 8 becomes a second air fuel ratio.

In the following, an execution procedure of reducing agent supply processing in this second embodiment will be described in line with Fig. 5. Fig. 5 is a flow chart which shows a processing routine carried out by the ECU 11 at the time the reducing agent supply processing is performed. This processing routine has been stored in advance in the ROM of the ECU 11, and is carried out in a periodic manner by means of the ECU 11. Here, note that in Fig. 5, like symbols are attached to processes similar to those in the above-mentioned processing routine of the first embodiment (see Fig. 4).

In the processing routine of Fig. 5, in cases where an affirmative determination is made in step S102, the ECU 11 carries out the processing of step S201. In step S201, the ECU 11 reads in the temperature Tcat of the storage reduction catalyst (i.e., ambient temperature in the interior of the second catalyst casing 9) and the output signal Dnox of the NOx sensor 15. The temperature Tcat of the storage reduction catalyst may be calculated by using as a parameter the operating state of the internal combustion engine 1 (the amount of fuel injection and the amount of intake air). In addition, the output signal of the exhaust gas temperature sensor 14 may be substituted for the temperature Tcat of the storage reduction catalyst.

The ECU 11 carries out the processing of step S202 after the execution of the processing of step S201. In step S202, the ECU 11 determines whether the value of the output signal Dnox read in the above-mentioned step S201 is equal to or less than an upper limit value Dnoxmax, and whether the temperature Tcat of the storage reduction catalyst is equal to or higher than a predetermined temperature Tact. The "predetermined temperature Tact" referred to herein corresponds to the lowest temperature at which the NH₃ generation capacity of the storage reduction catalyst is activated.

In cases where an affirmative determination is made in the above-mentioned step S202, the routine of the ECU 11 goes to the processing of step S203, where a determination is made that the NH₃ generation capacity of the storage reduction catalyst has been activated. In that case, the routine of the ECU 11 goes to step S106, where reducing agent supply processing using the storage reduction catalyst as a catalyst for generation of NH₃ (first reducing agent supply processing) is carried out.

In cases where a negative determination is made in the above-mentioned step S202, the routine of the ECU 11 goes to the processing of step S204, where a determination is made that the NH₃ generation capacity of the storage reduction catalyst has not been activated. In that case, the routine of the ECU 11 goes to the processing of step S111, where reducing agent supply processing using the three-way catalyst and the storage reduction catalyst as catalysts for generation of NH₃ (second reducing agent supply processing) is carried out.

As described above, in cases where the ECU 11 carries out reducing agent supply processing according to the processing routine of Fig. 5, when the NH₃ generation capacity of the storage reduction catalyst has been activated, NH₃ is generated by the storage reduction catalyst, whereas when the NH₃ generation capacity of the storage reduction catalyst has not been activated, NH₃ is generated by the three-way catalyst. Accordingly, even when the NH₃ generation capacity of the storage reduction catalyst has not been activated, as at the time of warming up operation after the internal combustion engine 1 was cold started, it becomes possible to generate a desired amount NH₃.

The above-mentioned first and second embodiments can be combined with each other, as appropriate. For example, in the processing routine of Fig. 5, the processings of steps S107 through S110, which have been described in the explanation of the processing routine of Fig. 6, may be carried out, instead of the processing of S204 being carried out. In that case, in the case where the NH₃ generation capacity of the storage reduction catalyst becomes low (in the case where the storage reduction catalyst has been subjected to thermal deterioration or sulfur poisoning), in addition to the case where the NH₃ generation capacity of the storage reduction catalyst has not been activated, the second reducing agent supply processing will be carried out. As a result, it becomes possible to generate a desired amount of NH₃ in a much wider operating region.

Here, note that in the above-mentioned first and second embodiments, as a method of controlling the air fuel ratio of the exhaust gas flowing into the first catalyst casing 8 or the second catalyst casing 9 to be a rich air fuel ratio, there has been mentioned a method of carrying out post injection or after injection from the fuel injection valve 4, but a fuel addition valve may be mounted on the exhaust passage 7 at a location upstream of the first catalyst casing 8, so that fuel may be added from the fuel addition valve.

### [EXPLANATION OF REFERENCE NUMERALS AND CHARACTERS]

- 1: internal combustion engine
- 2: cylinder
- 3: piston
- 4: fuel injection valve
- 5: intake port
- 6: exhaust port
- 7: exhaust passage
- 8: first catalyst casing
- 9: second catalyst casing
- 10: third catalyst casing
- 11: ECU
- 12: A/F sensor
- 13: O₂ sensor
- 14: exhaust gas temperature sensor
- 15: NOx sensor
- 16: crank position sensor
- 17: accelerator position sensor

## Claims

1. An exhaust gas purification apparatus for an internal combustion engine comprising:
a storage reduction catalyst that is arranged in an exhaust passage of the internal combustion engine adapted to be operated in a lean burn state, and serves to reduce nitrogen oxides to ammonia when an air fuel ratio of an exhaust gas flowing thereinto is a first rich air fuel ratio which is lower than a theoretical air fuel ratio;
a selective catalytic reduction catalyst that is arranged in the exhaust passage at a location downstream of said storage reduction catalyst, and serves to reduce nitrogen oxides in the exhaust gas by using ammonia as a reducing agent;
a three-way catalyst that is arranged in the exhaust passage at a location upstream of said storage reduction catalyst; and
a control unit that controls the air fuel ratio of the exhaust gas flowing into said three-way catalyst to a second rich air fuel ratio which is higher than said first rich air fuel ratio and lower than the theoretical air fuel ratio, when the ammonia generation capacity of said storage reduction catalyst has become low.

2. The exhaust gas purification apparatus for an internal combustion engine in claim 1, further comprising:
an NOx sensor that is arranged in the exhaust passage at a location downstream of said storage reduction catalyst and upstream of said selective catalytic reduction catalyst, for detecting an amount of the nitrogen oxides contained in the exhaust gas;
wherein said control unit makes a determination that the ammonia generation capacity of said storage reduction catalyst becomes low, on condition that the amount of NOx detected by said NOx sensor at the time when the air fuel ratio of the exhaust gas flowing into said storage reduction catalyst is a lean air fuel ratio higher than the theoretical air fuel ratio exceeds an upper limit value thereof.

3. The exhaust gas purification apparatus for an internal combustion engine in claim 1, further comprising:
an NOx sensor that is arranged in the exhaust passage at a location downstream of said storage reduction catalyst and upstream of said selective catalytic reduction catalyst, for detecting an amount of the nitrogen oxides contained in the exhaust gas; and
a temperature sensor that detects a temperature of said storage reduction catalyst;
wherein said control unit makes a determination that the ammonia generation capacity of said storage reduction catalyst becomes low, on condition that the amount of NOx detected by said NOx sensor at the time when the air fuel ratio of the exhaust gas flowing into said storage reduction catalyst is a lean air fuel ratio higher than the theoretical air fuel ratio and when the temperature detected by said temperature sensor is equal to or less than a predetermined temperature exceeds an upper limit value thereof.
